Europäisches Patentamt

(19) European Patent Office

Office européen des brevets

(11) Publication number: **0 283 067 B1**

(12) EUROPEAN PATENT SPECIFICATION

(45) Date of publication of patent specification: **29.04.92** (51) Int. Cl.⁵: **C08F 10/02**, C08F 4/685

(21) Application number: **88200291.8**

(22) Date of filing: **18.02.88**

(54) **High-temperature (co)polymerization of ethylene by using a catalyst system.**

(30) Priority: **09.03.87 NL 8700559**

(43) Date of publication of application:
**21.09.88 Bulletin 88/38**

(45) Publication of the grant of the patent:
**29.04.92 Bulletin 92/18**

(84) Designated Contracting States:
**AT BE CH DE ES FR GB IT LI NL SE**

(56) References cited:
EP-A- 280 352          EP-A- 0 057 050
EP-A- 0 131 420        FR-A- 2 388 835
US-A- 4 172 050        US-A- 4 335 229

(73) Proprietor: **DSM N.V.**
**Het Overloon 1**
**NL-6411 TE Heerlen(NL)**

(72) Inventor: **Coosemans, Luc Maria Constant**
**Tulpenstraat 194**
**B-3530 Houthalen(BE)**
Inventor: **Blenkers, Johannes**
**Julianalaan 34**
**NL-6191 AM Beek (Lb)(NL)**
Inventor: **van den Bosch, Frans**
**Holleweg 12**
**NL-6365 BS Schinnen(NL)**

## Description

The invention relates to a process for the (co)-polymerization of ethylene and optionally minor amounts of 1-alkenes and/or dienes at a temperature of at least 180¤C in a reactor using a catalyst system.

There are numerous catalyst systems that are capable of bringing about polymerization of ethylene and/or 1-alkenes. Thus, for instance, so-called Phillips and Ziegler-Natta systems can be distinguished. Of these, a number relate to polymerization in the gas phase. Others are directed at polymerization in the presence of a liquid dispersant. The latter can be subdivided into the so-called suspension system, with polymerization taking place at temperatures below the dissolution temperature of polyethylene, and the so-called solution system, with a polymerization temperature above the dissolution temperature of the polyethylene formed.

Solution polymerization requires special catalyst systems as the catalyst activity and the molecular weight of the polymer produced generally decrease with increasing polymerization temperature. It was not until the end of the sixties that a catalyst was developed the activity of which was such as to allow of solution polymerization of ethylene without there being any need to remove catalysts residues from the product (GB-A 1,235,062).

Polymerization generally takes place at temperatures that are only little above the dissolution temperature of polyethylene, because the activity of catalysts customarily applied so far decreases at high polymerization temperatures. At unchanged residence times, this means that the polymer yield decreases, as a result of which the amounts of catalyst residues in the polymer increase and washing out of the polymer soon becomes necessary.

A problem in this exothermic polymerization reaction is the dissipation of the heat of polymerization. Cooling through the wall or through cooling devices in the reactor may easily lead to polymer deposition on the cooling surfaces, especially at coolant temperatures below 150¤C. For this reason, strong cooling of the reactor feed is preferred. This, however, requires much energy and will become more expensive as fuel prices rise.

Polymerization at high temperatures would have energy advantages also in another respect: not only can the strong cooling of the reactor feed be reduced or even be done without, there also no longer is any need during polymer upgrading to heat the product in order to evaporate the solvent. The reason for this is that the heat of evaporation decreases or even becomes zero as the solution temperature increases and approaches, or even exceeds, the critical temperature of the solvent, and as a result the enthalpy of evaporation becomes minimal.

For the above reasons there is much demand for high-temperature catalysts. These catalysts should be so active as to retain sufficient activity also at very high polymerization temperatures (above 180¤C). Present-day legislation renders it even more difficult to meet this requirement by imposing clear limits as regards the amount of transition metals in products. In addition, the polymer produced is to meet the customary requirements as regards processability and applicability, which implies the molecular weight must be sufficiently high, or the melt index sufficiently low.

The invention aims to find a process for the (co)polymerization of ethylene and optionally minor amounts of 1-alkenes and/or dienes at a temperature of at least 180¤C using a catalyst system that meets the above requirements and that is suitable for plant application without sacrificing activity or the capacity to form large polymer molecules at very high polymerization temperatures.

It has, surprisingly, been found that in the claimed polymerization process using a catalyst system that is a combination of at least five components, which components comprise:
1. one or more titanium compounds
2. one or more vanadium compound
3. one or more magnesium compounds
4. only one organoaluminium compound
5. one or more alkyl, acyl and/or aryl chlorides, or chlorides of elements from groups 3a and 4a of the Periodic System,
the atomic ratio of magnesium to the sum of titanium and vanadium being between above 0 and 10, the atomic ratio of aluminium to the sum of titanium and vanadium being at least 3, the atomic ratio of aluminium to magnesium being at least 1, and the atomic ratio of chlorine to magnesium being at least 2, which components are fed, separately or in combination, direct to the reactor, very high polymerization temperatures can be used.

An advantage of a catalyst system used in the process according to the invention is that very high temperatures can be used for the production of polyethylene meeting the customary requirements as regards processability and applicability and containing such a small amount of catalyst residues that washing out of the product is not necessary.

The catalysts used in the process according to the subject invention not only are very active, but also very rapid, so that very short residence times can be used. Short residence times have the great advantage that a small reactor can be used. Thus,

in a 5 m$^3$ reactor an annual production of more than 50.000 t can be reached when using the catalysts according to the invention.

With these catalysts, residence times of 10 minutes or shorter will suffice. At residence times of 5 minutes the yields still are so high that no washing treatment for catalyst residue removal need be applied.

Yet another advantage is that the components are fed direct to the reactor, that is, without heating, hour-long incubations, precipitate recovery and/or other treatments, which is a great advantage in plant application.

The residence time of the various catalyst components in the feed lines generally is sufficient for obtaining an active catalyst system. In most cases this residence time will not be longer than some, for instance 5, minutes, and often even less, for instance less than 3 minutes or even less than 1 minute.

Catalyst systems used in the process according to the invention have the highest activity at an atomic ratio of aluminium to the sum of titanium and vanadium of at least 5. It is recommendable for the atomic ratio of magnesium to the sum of titanium and vanadium to be between 0.01 and 5, in particular between 0.02 and 4. Lower ratios, such as 3 or less, 2 or less, and even 1 or less, also yield good results. A further activity increase is achieved at an atomic ratio of aluminium to magnesium of at least 3, in particular 5. An atomic ratio of halogen to magnesium of at least 4, and in particular at least 6, is to be recommended. Furthermore, an atomic ratio of titanium to vanadium of at most 1, and in particular at most 0.8, is to be preferred.

The atomic ratio of aluminium to the sum of titanium and vanadium will generally not exceed 200, and in particular it will not exceed 100. The atomic ratio of aluminium to magnesium will mostly be at most 200, in particular at most 100, and the same holds for the atomic ratio of halogen to magnesium. The atomic ratio of titanium to vanadium usually is at least 0.001, in particular at least 0.01.

As titanium compounds, both tetra- and trivalent compounds of the general formula $Ti(OR^1)_{4-n}X^1_n$ and $Ti(OR^2)_{3-m}X^2_m$, respectively, where $R^1$ and $R^2$ are equal or different and represent hydrocarbon residues with 1-20 carbon atoms, $X^1$ and $X^2$ halogen atoms, and $0 \leq n \leq 4$ and $n \leq m \leq 3$, yield good results. Of these compounds, titanic acid esters such as TBT or TIPT are to be preferred. Titanium complexes such as, for instance $TiCl_3 . 3$ decanol, TBT . $AlCl_3$, TBT . 0.2 $Cr(acac)_2$, TBT . x $CrO_3$ and TBT . x diethylzinc $(0 < x \leq 1)$ may also be applied. Compounds such as, for instance, cresyl titanate polymer $(CH_3C_6H_4[Ti$

$(OC_6H_4CH_3)_2O]_aOC_6H_4CH_3$ with $a \geq 1$ can likewise be applied (see the list of abbreviations hereinafter).

As vanadium compounds, use can be made of compounds of the general formula $VO(OR^3)_{3-p}X^3_p$, where the symbols $R^3$ are equal or different and represent a hydrocarbon residue with 1-20 carbon atoms, X3 a halogen atom and $0 \leq p \leq 3$, in particular vanadyl chloride and/or vanadyl butoxide. It is also possible to use vanadium compounds of the general formula $VX^4_3$ or $VX^4_4$, where $X^4$ represents a halogen atom. $X^4$ preferably is a chlorine atom. Mixtures of titanium compounds and/or of vanadium compounds can also be used as catalyst components.

The magnesium compounds preferably are organo-magnesium compounds and in particular possess at least one hydrocarbon residue bound to the magnesium atom, preferably an alkyl residue. In particular dialkylmagnesium compounds yield a catalyst system with a high activity. The organomagnesium compound may also be complexed with other organometal compounds so as to obtain a soluble product. For this purpose for instance organozinc, organoborium, but especially organoaluminium compounds are suitable. Examples of organomagnesium compounds that are suitable for the catalyst system are ethylbutyl magnesium, dibutyl magnesium, and higher dialkylmagnesium compounds, as well as complexes of, for instance, dibutyl magnesium . 1/3 triethylaluminium or mixtures of these.

The organoaluminium compound can be chosen from a large group of compounds. Preference is given to an organoaluminium compound of the general formula $R^4_qAlX^5_{3-q}$, where the symbols $R^4$ are equal or different and represent a hydrocarbon residue with 1-20 carbon atoms, in particular alkyl, $X^5$ represents a halogen atom, in particular chlorine, and $0 < q \leq 3$. Mixtures can also be applied.

Examples of organoaluminium compounds are: DEAC, MEAC, MMAC, SFAC, SMAC, TEA, TIBA, TMA, as well as compounds with aluminium bonded to oxygen, including alkyl siloxalanes. Particularly SEAC, DEAC, TMA and/or TEA yield good results. (See the list of abbreviations hereinafter).

The chlorides comprise alkyl chlorides (such as isopropyl chloride), acyl chlorides, aryl chlorides (such as benzyl chloride), chlorides of elements from groups 3a and 4a of the Periodic System (Handbook of Chemistry and Physics, 52nd ed.), or combinations thereof. $SnCl_4$, $SiCl_4$ and/or $BCl_3$ are preferred.

An active catalyst yielding a high polymer molecular weight, also at very high polymerization temperatures, is obtained also when one or more electron donors (Lewis bases), are present, such as, for instance, DEA, EB, IPA, acetyl acetone and/or MPT. (See the list of abbreviations hereinafter).

This electron donor is preferably added together with one of the other compounds, for instance in the form of tetrabutoxytitanium, tetraisopropoxytitanium and/or vanadyl butylate, or premixed with the aluminium compound.

The catalyst components may be fed to the reactor separately or in combination. The mixing sequence of the components is of little importance.

It is, however, preferred to mix the magnesium compound with the organoaluminium compound, optionally in combination with an electron donor, before addition of the titanium compound, vanadium compound and chloride.

Thus, for instance, first an organoaluminium compound and a magnesium compound can be mixed, then a titanium and a vanadium compound can be added, and lastly the chloride. It also is possible to mix the organoaluminium compound first with the chloride, and subsequently with a magnesium, a titanium and a vanadium compound. Another possibility is to add the organoaluminium compound and the magnesium compound to one of the transition metal compounds before adding the second transition metal compound. It may be preferable for the vanadium and titanium compounds to be mixed beforehand, especially when one of the two is less stable, such as $VOCl_3$.

It also is possible to supply the catalyst components to the reactor using separate feed lines. In that case it is preferred to feed a combination of the transition metals through one feed line and a combination of the other catalyst components through another feed line. It also is possible to supply the magnesium compound with an electron donor and the transition metals in a combination through one feed line, and the aluminium compound in combination with the chloride through another one.

In so far as the catalyst components are mixed before being supplied to the reactor, it is recommendable to effect this at a temperature below 125¤C. In particular below 75¤C, more in particular below 50¤C. The temperature will generally not be below -60¤C.

The presence or absence of monomer(s) during mixing of the catalyst components has little effect on catalyst activity.

Polymers obtained by means of a catalyst used in the process according to the invention comprise ethylene, one or more 1-alkenes with 3 to 18 carbon atoms in an amount of 0 to 15 moles % relative to the total polymer, and one or more dienes with at least 7 carbon atoms in an amount of 0 to 10 moles % relative to the total polymer. Good properties are found in particular in polymers in which the dienes contain at least two non-conjugated double bonds capable of being polymerized by means of transition metal catalysts and in which the amount of dienes does not exceed 0.1 moles % relative to the total polymer.

These polymers may contain the customary additives, such as stabilizers, lubricants, and also, for instance, crosslinking agents and fillers.

Polymers obtained by means of a catalyst used in the process according to the invention possess the customary, commercially desirable properties, such as a sufficiently high molecular weight (low melt index) and good processability. They can be used for the preparation of cast film and blown film with good mechanical and optical properties, while also the rheological and welding properties meet the normal requirements. The polymers also are suitable for many other customary applications, e.g. injection moulding, rotational moulding, blow moulding.

Polymerization can be effected in a manner known per se, both batchwise and continuously. In general the catalyst components, prepared in advance, are added in such amounts that the amount of titanium in the polymerization medium is 0.001 to 4 mmol/l, preferably 0.005 to 0.5 mmol/l, and more in particular 0.01 to 0.05 mmole/l.

As dispersant, both in catalyst preparation and in polymerization, use can be made of any liquid that is inert relative to the catalyst system, for instance one or more saturated, straight or branched aliphatic hydrocarbons, such as butanes, pentanes, hexanes, heptanes, pentamethylheptane or petroleum fractions such as light or regular-grade petrol, isopar, naphtha, kerosine, gas oil. Aromatic hydrocarbons, for instance benzene or toluene, are usable, but such solvents will generally not be used in technical-scale production, both for cost considerations and for safety considerations. By preference, therefore, as solvent in technical-scale polymerizations use is made of the cheap aliphatic hydrocarbons, or mixtures thereof, as marketed by the petrochemical industry. In many cases, pre-treatments of such solvents, for instance drying or purification, are required. This will present no problems whatsoever to the average person skilled in the art. Of course, cyclic hydrocarbons such as cyclohexane and decalin can also be used as solvent.

Polymerization is effected at temperature above 180¤C, and more in particular at temperatures above 200¤C. For practical considerations the temperature will generally not exceed 300¤C.

The polymer solution obtained upon polymerization can be upgraded in a way known per se, the catalyst generally being deactivated at some stage of upgrading. Deactivation can be effected in a way known per se. The catalysts used in the process according to the present invention have such a high activity that the amount of catalyst in the polymer, notably the transition metal content, is so low that removal of catalyst residues can be done without. Of course the polymer can, if this is desired, be subjected to a washing treatment to reduce the residual content of catalyst components even further.

Polymerization can be effected at atmospheric pressure but also at elevated pressure, up to about 1000 bar, or at even higher pressures, both in continuous and in discontinuous manner. By polymerizing under pressure, the polymer yield can be increased further, which may contribute to the preparation of a polymer with a very low content of catalyst residues.
Polymerization is preferably effected at pressures of 1-200 bar, and more in particular of 10-100 bar.

Pressures in excess of 100 bar soon give rise to technological objections. However, if polymerization takes place in so-called high-pressure reactors, pressures that are much higher, of 1000 bar and more, can be used.

In the subject process, modifications known per se can be applied. Thus, for instance, the molecular weight can be controlled by addition of hydrogen or other agents customarily applied for the purpose. Polymerization can also be effected in several stages, connected either in parallel or in series, in which, if desired, differing catalyst compositions, temperatures, residence times, pressures, hydrogen concentrations, are applied. It is, for instance, possible to prepare products with a broad molecular weight distribution by choosing the conditions, for instance pressure, temperature and hydrogen concentration, in one stage such that a polymer with a high molecular weight is formed, while the conditions in another stage are chosen such that a polymer with a lower molecular weight is formed.

The invention will now be elucidated with reference to some examples, without, however, being restricted thereto.

List of abbreviations used:

- Acac = acetylacetonate
- DEA = diethylamine
- DEAC = diethylaluminium chloride
- EB = ethyl benzoate
- EBM = ethylbutyl magnesium
- IPA = isopropyl alcohol
- MEAC = monoethylaluminium dichloride
- MMAC = monomethylaluminium dichloride
- MPT = methylparatoluate
- SEAC = sesquiethylaluminium chloride (ethyl$_{1.5}$AlCl$_{1.5}$)
- SMAC = sesquimethylaluminium chloride (methyl$_{1.5}$AlCl$_{1.5}$)
- TBT = tetrabutoxytitanium
- TEA = triethylaluminium
- TIBA = triisobutylaluminium
- TMA = trimethylaluminium
- VB = vanadyl butoxide

Polymerization experiments were conducted at 240¤C in a one-litre gas-liquid reactor with 500 ml purified and dried pentamethylheptane (PMH) as dispersant and ethylene to a reactor pressure of 8 bar. The catalyst components were premixed in PMH during 1 minute at 25¤C and subsequently pumped into the reactor. The polymerization time was 10 minutes. The polymer was stabilized, if necessary, dried and weighed. The yield is expressed in g polymer per mmole titanium + vanadium. The activity o of the catalyst system is expressed as g PE/mmole (Ti + V). 10 minutes. The melt index (M.I.) of the polymer, expressed in dg/min, is determined in accordance with ASTM D 1238, cond. E.

Example I

EBM, DEAC, SnCl$_4$, VB and TBT were mixed in this sequence and fed to the reactor so that the amounts present during polymerization were 0.4, 0.6, 0.2, 0.06 and 0.04 mmole/l, respectively. The catalyst had an activity $\alpha$ of 392, and the polymer formed had a melt index of 11.5 dg/min.

Example II

EBM, SnCl$_4$, DEAC, VB and TBT were mixed in this sequence and fed to the reactor so that the amounts present during polymerization were 0.2, 0.2, 0.6, 0.06 and 0.04. respectively, $\alpha$ was 303, and the melt index 11 dg/min.

Example III

Example II was repeated with 0.6 mmole/l TMA instead of DEAC. $\alpha$ was 366, and the melt index 10 dg/min.

Example IV

EBM, IPA, SnCl$_4$, TEA, VB and TBT were mixed in this sequence and fed to the reactor so that the amounts present during polymerization were 0.2, 0.2, 0.2, 0.6, 0.06 and 0.04 mmole/l, respectively. $\alpha$ was 461, the melt index 10 dg/min.

## Comparative example 1

EBM, IPA, TBT, $SnCl_4$ and TEA were mixed in this sequence and fed to the reactor so that the amounts present during polymerization were 0.8, 1.5, 0.1, 0.8 and 0.2 mmole/l, respectively. $\alpha$ was 187.

## Comparative example 2

EBM, SEAC, VB, TBT and $SnCl_4$ were mixed in this sequence and supplied to the reactor so that the amounts present during polymerization were 4.0, 6.0, 0.06, 0.04 and 0,2 mmol/l, respectively. $\alpha$ was lower than 50.

## Comparative example 3

Comparative example 2 was repeated, but now with 2.0 mmole/l EBM and 3.0 mmol/l SEAC. $\alpha$ was lower than 50.

## Example V

In this example the reactor pressure was 17 bar. SEAC, EBM, TBT, VB and $SiCl_4$ were mixed in this sequence and fed to the reactor so that the amounts present during polymerization were 0.6, 0.06, 0.04, 0.06 and 0.2 mmole/l, respectively. $\alpha$ was 1440 and the melt index of the polymer formed was 25.1 dg/min.

## Comparative example 4

Example V was repeated, but in the absence of $SiCl_4$. $\alpha$ was 710 and the melt index too high for a useful polymer (> 50 dg/min).

## Comparative example 5

In a final volume of 50 ml PMH 0.6 mmole/l of an EBM-solution were added to a solution of 6 mmole/l SEAC and stirred at 70¤C for two hours. Then $SiCl_4$ was added in a final concentration of 2 mmole/l and stirring at 70¤C was continued for two hours. After addition of a mixture of VB and TBT (final concentrations 0.6 and 0.4 mmole/l, resp.), the mixture was stirred for two hours at 100¤C. The resulting brownish precipitate was not active in polymerization ($\alpha$ < 50).

## Comparative example 6

Comparative example 5 was repeated, but after addition of VB and TBT now the mixture was stirred for 5 hours at 70¤C. The catalyst activity was 110.

## Claims

1.  Process for the (co)polymerization of ethylene and optionally minor amounts of 1-alkenes and/or dienes at a temperature of at least 180¤C, in a reactor using a catalyst system, in which process the catalyst system is prepared by combining at least five components, which components comprise:
    1. one or more titanium compounds
    2. one or more vanadium compounds
    3. one or more magnesium compounds
    4. only one organoaluminium compound
    5. one or more alkyl, acyl and/or aryl chlorides, or chlorides of elements from groups 3a and 4a of the Periodic System,
    the atomic ratio of magnesium to the sum of titanium and vanadium being between above 0 and 10, the atomic ratio of aluminium to the sum of titanium and vanadium being at least 3, the atomic ratio of aluminium to magnesium being at least 1, and the atomic ratio of chlorine to magnesium being at least 2, which components are fed, separately or in combination, direct to the reactor.

2.  Process according to claim 1, characterized in that the atomic ratio of magnesium to the sum of titanium and vanadium is between 0.01 and 5.

3.  Process according to any one of claims 1-2, characterized in that the atomic ratio of aluminium to the sum of titanium and vanadium is at least 5.

4.  Process according to any one of claims 1, characterized in that the atomic ratio of aluminium to magnesium is at least 3.

5.  Process according to any one of claims 1-4, characterized in that the atomic ratio of titanium to vanadium is lower than or equal to 1.

6.  Process according to any one of claims 1-5, characterized in that the chloride is $BCl_3$ $SiCl_4$ and/or $SnCl_4$.

7.  Process according to any one of claims 1-6, characterized in that the titanium compound belongs to the compounds of the general formula $Ti(OR1)_{4-n}X^1_n$ and/or $Ti(OR^2)_{3-m}X^2_m$, where the symbols $R^1$ and $R^2$ are equal or different and represent hydrocarbon residues with 1-20 carbon atoms, $X^1$ and $X^2$ halogen atoms, $0 \leqq n \leqq 4$ and $n \leqq m \leqq 3$.

8. Process according to claim 7, characterized in that the titanium compound is a titanic acid ester.

9. Process according to claim 8, characterized in that the titanium compound is tetrabutoxytitanium.

10. Process according to any one of claims 1-9, characterized in that the vanadium compound belongs to the compounds of the general formula $VO(OR^3)_{3-p}X^3_p$, where the symbols $R^3$ are equal or different and represent a hydrocarbon residue with 1-20 hydrocarbon atoms, $X^3$ a halogen atom, and $0 \leqq p \leqq 3$.

11. Process according to claim 10, characterized in that the vanadium compound is vanadyl chloride and/or vanadyl butoxide.

12. Process according to any one of claims 1-9, characterized in that the vanadium compound belongs to the compounds of the general formula $VX^4_3$ or $VX^4_4$, where $X^4$ represents a halogen atom.

13. Process according to any one of claims 1-12, characterized in that the magnesium compound contains at least one hydrocarbon residue bonded to the magnesium atom.

14. Process according to claim 13, characterized in that the magnesium compound is a dialkylmagnesium compound.

15. Process according to any one of claims 1-14, characterized in that the organoaluminium compound belongs to the compounds of the general formula $R^4_qAl\ X^5_{3-q}$, where the symbols $R^4$ are equal or different and represent a hydrocarbon residue with 1-20 hydrocarbon atoms, $X^5$ represents a halogen atom and $0 < q \leqq 3$

16. Process according to claim 15, characterized in that the organoaluminium compound is trialkylaluminium, dialkylaluminium chloride and/or sesquialkylaluminium chloride.

17. Process according to any one of claims 1-16, characterized in that also one or more electron donors are present.

18. Process according to any one of claims 1-17, characterized in that the catalyst components are supplied to the reactor in combination.

19. Process according to claim 18, characterized in that the magnesium compound and the organoaluminium compound are mixed before being combined with the other catalyst components.

20. Process according to any one of claims 1-17, characterized in that a combination of the transition metal compounds and a combination of the other catalyst components are separately fed to the reactor.

21. Process according to any one of claims 18-20, characterized in that the organoaluminium compound is mixed with an electron donor before being combined with the other catalyst components.

22. Process according to any one of claims 18-21, characterized in that the catalyst components are mixed at a temperature below 125¤C.

23. Process according to claim 22, characterized in that the catalyst components are mixed at a temperature below 75¤C.

**Revendications**

1. Procédé de (co)polymérisation d'éthylène et, facultativement, de petites quantités d'alcènes-1 et/ou de diènes à une température d'au moins 180°C, dans un reacteur utilisant un système catalytique, procédé selon lequel on prépare le système catalytique en combinant au moins cinq composants, ces composants comprenant :
   1. un ou plusieurs composé(s) de titane,
   2. un ou plusieurs composé(s) de vanadium,
   3. un ou plusieurs composé(s) de magnésium,
   4. seulement un composé d'organo-aluminium et
   5. un ou plusieurs chlorure(s) d'alkyle, d'acyle et/ou d'aryles ou de chlorures d'éléments appartenant aux Groupes 3a et 4a de la Classification Périodique des Eléments, le rapport atomique du magnésium à la somme de titane et vanadium étant compris entre une valeur supérieure à zéro et dix, le rapport atomique de l'aluminium à la somme de titane et vanadium étant d'au moins 3, le rapport atomique de l'aluminium au magnésium étant d'au moins 1 et le rapport atomique du chlore au magnésium étant d'au moins 2, ces composants étant introduits séparément ou en combinaison directement dans le réacteur.

2. Procédé selon la revendication 1, caractérisé en ce que le rapport atomique du magnésium à la somme de titane et vanadium est compris entre 0,01 et 5.

3. Procédé selon la revendication 1 ou 2, caractérisé en ce que le rapport atomique de l'aluminium à la somme de titane et de vanadium est d'au moins 5.

4. Procédé selon l'une quelconque des revendications 1 à 3, caractérisé en ce que le rapport atomique de l'aluminium au magnésium est d'au moins 3.

5. Procédé selon l'une quelconque des revendications 1 à 4, caractérisé en ce que le rapport atomique de titane au vanadium est inférieur ou égal à 1.

6. Procédé selon l'une quelconque des revendications 1 à 5, caractérisé en ce que le chlorure est $BCl_3$, $SiCl_4$ et/ou $SnCl_4$.

7. Procédé selon l'une quelconque des revendications 1 à 6, caractérisé en ce que le composé de titane appartient à la série des composés de formule générale $Ti(OR^1)_{4-n}X^1_n$ et/ou $Ti(OR^2)_{3-m}X^2_m$, dans laquelle les symboles $R^1$ et $R^2$, qui peuvent être identiques ou différents, représentent chacun un reste hydrocarboné de 1 à 20 atomes de carbone, $X^1$ et $X^2$ sont des atomes d'halogène, $0 \leq n \leq 4$ et $0 \leq m \leq 3$.

8. Procédé selon la revendication 7, caractérisé en ce que le composé de titane est un ester d'acide titanique.

9. Procédé selon la revendication 8, caractérisé en ce que le composé de titane est le tetrabutoxytitane.

10. Procédé selon l'une quelconque des revendications 1 à 9, caractérisé en ce que le composé de vanadium appartient à la série des composés de formule générale :

$$VO(OR^3)_{3-p}X^3_p$$

dans laquelle les symboles $R^3$, qui peuvent être identiques ou différents, représentent chacun un reste hydrocarboné de 1 à 20 atomes de carbone, $X^3$ est un atome d'halogène, et $0 \leq p \leq 3$.

11. Procédé selon la revendication 10, caractérisé en ce que le composé de vanadium est le chlorure de vanadyle et/ou le butylate de vanadyle.

12. Procédé selon l'une quelconque des revendications 1 à 9, caractérisé en ce que le composé de vanadium appartient à la série de composés de formule générale

$$VX^4_3 \text{ ou } VX^4_4$$

dans laquelle $X^4$ représente un atome d'halogène.

13. Procédé selon l'une quelconque des revendications 1 à 12, caractérisé en ce que le composé de magnésium contient au moins un reste hydrocarboné lié à l'atome de magnésium.

14. Procédé selon la revendication 13, caractérisé en ce qu ele composé de magnésium est un dialkylmagnésium.

15. Procédé selon l'une quelconque des revendications 1 à 14, caractérisé en ce que le composé d'organoaluminium appartient à la série des composés de formule générale : $R^4AlX^5_{3-n}$ dans laquelle les symboles $R^4$, qui peuvent être identiques ou différents représentent chacun un reste hydrocarboné de 1 à 20 atomes de carbone, $X^5$ est un atome d'halogène et $0 < a \leq 3$.

16. Procédé selon la revendication 15, caractérisé en ce que le composé d'organo-aluminium est le trialkylaluminium, le chlorure de dialkylaluminium et/ou le chlorure de sesquialkylaluminium.

17. Procédé selon l'une quelconque des revendications 1 à 16, caractérisé en ce qu'un ou plusieurs donneur(s) d'électrons sont également présent(s).

18. Procédé selon l'une quelconque des revendications 1 à 17, caractérisé en ce qu'on introduit les composants du catalyseur dans le réacteur en combinaison.

19. Procédé selon la revendication 18, caractérisé en ce qu'on mélange le composé de magnésium et le composé d' organo-aluminium avant leur combinaison avec les autres composants du catalyseur.

**20.** Procédé selon l'une quelconque des revendications 1 à 17, caractérisé en ce qu'on introduit séparément dans le réacteur une combinaison des composés de métaux de transition et une combinaison des autres composants du catalyseur.

**21.** Procédé selon l'une quelconque des revendications 18 à 20, caractérisé en ce qu'on mélange le composé d'organo-aluminium avec un donneur d'électrons avant de les combiner avec les autres composants du catalyseur.

**22.** Procédé selon l'une quelconque des revendications 18 à 21, caractérisé en ce qu'on mélange les composants du catalyseur à une température inférieure à 125°C.

**23.** Procédé selon la revendication 22, caractérisé en ce qu'on mélange les composants du catalyseur à une température inférieure à 75°C.

**Patentansprüche**

**1.** Verfahren zur (Co)polymerisation von Ethylen und gegebenenfalls kleinen Mengen von 1-Alkenen und/oder Dienen bei einer Temperatur von wenigstens 180°C in einem Reaktor unter Verwendung eines Katalysatorsystems, in welchem Verfahren das Katalysatorsystem durch Kombinieren von wenigstens fünf Komponenten hergestellt wird, welche Komponenten:
1. eine oder mehrere Titanverbindungen
2. eine oder mehrere Vanadiumverbindungen
3. eine oder mehrere Magnesiumverbindungen
4. nur eine Organoaluminiumverbindung
5. ein oder mehrere Alkyl-, Acyl- und/oder Arylchloride, oder Chloride von Elementen der Gruppen 3a und 4a des Periodensystems,
umfassen, wobei das Atomverhältnis von Magnesium zur Summe von Titan und Vanadium zwischen über 0 und 10 beträgt, das Atomverhältnis von Aluminium zur Summe von Titan und Vanadium wenigstens 3 beträgt, das Atomverhältnis von Aluminium zu Magnesium wenigstens 1 beträgt und das Atomverhältnis von Chlor zu Magnesium wenigstens 2 beträgt, welche Komponenten getrennt oder in Kombination direkt in den Reaktor eingespeist werden.

**2.** Verfahren nach Anspruch 1, dadurch gekennzeichnet, daß das Atomverhältnis von Magnesium zur Summe von Titan und Vanadium zwischen 0,01 und 5 beträgt.

**3.** Verfahren nach einem der Ansprüche 1 bis 2, dadurch gekennzeichnet, daß das Atomverhältnis von Aluminium zur Summe von Titan und Vanadium wenigstens 5 beträgt.

**4.** Verfahren nach einem der Ansprüche 1 bis 3, dadurch gekennzeichnet, daß das Atomverhältnis von Aluminium zu Magnesium wenigstens 3 beträgt.

**5.** Verfahren nach einem der Ansprüche 1 bis 4, dadurch gekennzeichnet, daß das Atomverhältnis von Titan zu Vanadium kleiner oder gleich 1 ist.

**6.** Verfahren nach einem der Ansprüche 1 bis 5, dadurch gekennzeichnet, daß das Chlorid $BCl_3$, $SiCl_4$ und/oder $SnCl_4$ ist.

**7.** Verfahren nach einem der Ansprüche 1 bis 6, dadurch gekennzeichnet, daß die Titanverbindung zu den Verbindungen der allgemeinen Formel $Ti(OR^1)_{4-n}X^1_n$ und/oder $Ti(OR^2)_{3-m}X^2_m$ gehört, worin die Symbole $R^1$ und $R^2$ gleich oder verschieden sind und Koh-lenwasserstoffreste mit 1 bis 20 Kohlenstoffatomen darstellen, $X^1$ und $X^2$ Halogenatome bedeuten, $0 \leq n \leq 4$ und $0 \leq m \leq 3$ ist.

**8.** Verfahren nach Anspruch 7, dadurch gekennzeichnet, daß die Titanverbindung ein Titansäureester ist.

**9.** Verfahren nach Anspruch 8, dadurch gekennzeichnet, daß die Titanverbindung Tetrabutoxytitan ist.

**10.** Verfahren nach einem der Ansprüche 1 bis 9, dadurch gekennzeichnet, daß die Vanadiumverbindung zu den Verbindungen der allgemeinen Formel $VO(OR^3)_{3-p}X^3_p$ gehört, worin die Symbole $R^3$ gleich oder verschieden sind und einen Kohlenwasserstoffrest mit 1 bis 20 Kohlenstoffatomen darstellen, $X^3$ ein Halogenatom bedeutet und $0 \leq p \leq 3$ ist.

**11.** Verfahren nach Anspruch 10, dadurch gekennzeichnet, daß die Vanadiumverbindung Vanadylchlorid und/oder Vanadylbutoxid ist.

**12.** Verfahren nach einem der Ansprüche 1 bis 9, dadurch gekennzeichnet, daß die Vanadiumverbindung zu den Verbindungen der allgemeinen Formel $VX^4_3$ oder $VX^4_4$ gehört, worin $X^4$ ein Halogenatom darstellt.

13. Verfahren nach einem der Ansprüche 1 bis 12, dadurch gekennzeichnet, daß die Magnesiumverbindung wenigstens einen an das Magnesiumatom gebundenen Kohlenwasserstoffrest enthält.

14. Verfahren nach Anspruch 13, dadurch gekennzeichnet, daß die Magnesiumverbindung eine Dialkylmagnesiumverbindung ist.

15. Verfahren nach einem der Ansprüche 1 bis 14, dadurch gekennzeichnet, daß die Organoaluminiumverbindung zu den Verbindungen der allgemeinen Formel: $R^4_q AlX^5_{3-q}$ gehört, worin die Symbole $R^4$ gleich oder verschieden sind und einen Kohlenwasserstoffrest mit 1 bis 20 Kohlenstoffatomen darstellen, $X^5$ ein Halogenatom bedeutet und $0 < q \leq 3$ ist.

16. Verfahren nach Anspruch 15, dadurch gekennzeichnet, daß die Organoaluminiumverbindung Trialkylaluminium, Dialkylaluminiumchlorid und/oder Sesquialkylaluminiumchlorid ist.

17. Verfahren nach einem der Ansprüche 1 bis 16, dadurch gekennzeichnet, daß auch ein oder mehrere Elektronendonoren vorhanden sind.

18. Verfahren nach einem der Ansprüche 1 bis 17, dadurch gekennzeichnet, daß die Katalysatorkomponenten in Kombination dem Reaktor zugeführt werden.

19. Verfahren nach Anspruch 18, dadurch gekennzeichnet, daß die Magnesiumverbindung und die Organoaluminiumverbindung vor dem Kombinieren mit den anderen Katalysatorkomponenten gemischt werden.

20. Verfahren nach einem der Ansprüche 1 bis 17, dadurch gekennzeichnet, daß eine Kombination der Übergangsmetallverbindungen und eine Kombination der anderen Katalysatorkomponenten getrennt in den Reaktor eingespeist werden.

21. Verfahren nach einem der Ansprüche 18 bis 20, dadurch gekennzeichnet, daß die Organoaluminiumverbindung mit einem Elektronendonor vor Kombination mit den anderen Katalysatorkomponenten gemischt wird.

22. Verfahren nach einem der Ansprüche 18 bis 21, dadurch gekennzeichnet, daß die Katalysatorkomponenten bei einer Temperatur unterhalb 125°C gemischt werden.

23. Verfahren nach Anspruch 22, dadurch gekennzeichnet, daß die Katalysatorkomponenten bei einer Temperatur unterhalb 75°C gemischt werden.